# EUROPEAN PATENT APPLICATION

(11) **EP 2 595 305 A1**
(43) Date of publication of application: **22.05.2013**
(21) Application number: 11189964.7
(22) Date of filing: 21.11.2011
(51) Int. Cl.: H02M 7/5388

(54) **Assymetric twin bridge DC/AC inverter capable of reactive power transfer**

(71) Applicant: Vincotech GmbH, 82008 Unterhaching (DE)
(72) Inventor: Ernö, Temesi, 2094 Nagykovácsi (HU); Chen, Daojie, 200120 Shanghai (CN); Frisch, Michael, 82008 Unterhaching (DE)
(74) Representative: Grünecker, Kinkeldey, Stockmair & Schwanhäusser

(57) **Abstract**

The invention relates to inverters employing a first and a second bridge circuit (1100, 1200) for converting DC input current into an AC output current. In particular, the invention proposes an inverter including two DC input terminals (DC+, DC-) with a first and a second bridge circuit (1100, 1200) connected in parallel therebetween, the first bridge circuit (1100) for providing a first half-wave of a first polarity to a pair of AC output terminals (AC1, AC2) and the second bridge circuit (1200) for providing a second half-wave of an opposite polarity to the pair of AC output terminals (AC1, AC2). The first half-wave is supplied from the first bridge circuit via a first and a second inductive element (1301, 1302) to the pair of AC output terminals (AC1, AC2), and the second half-wave is supplied from the second bridge circuit (1200) via a third and a fourth inductive element (1303, 1304) to the pair of AC output terminals (AC1, AC2).

## Description

The invention generally relates to power electronic switching circuits and in particular to highly efficient inverters for converting a DC input voltage into an AC output voltage. Such inverters are, for instance, necessary for connecting electric DC power sources to a public power grid or to use DC power for supplying isolated AC appliances (i.e. without connection to the public power grid). Examples for electric DC power sources may be photovoltaic systems, fuel cell systems or batteries.

Efficiency is becoming increasingly important in the field of power electronics. In many applications, such as inverter modules for the solar market, the efficiency optimization turned out to represent a major design goal. Photovoltaic solar panels commonly use PWM, pulse width modulation, inverters to convert DC power generated by the solar cell into AC power which can be fed into the public power grid. Typical further applications of these inverters include their use in uninterruptible power supplies, UPS, fuel cells and wind turbines. Further, PWM inverters may be used to provide compensation for reactive loads, harmonic cancellation of supply grids or as variable speed drives for induction motors. The most commonly used inverters are one level (phase) and three level (phase) transformer-less inverters.

The most common switching element used in inverter designs are field effect transistors, FETs, such as metal oxide semiconductor field effect transistors, MOSFETs, bipolar transistors such as insulated gate bipolar transistors, IGBTs, bipolar junction transistors, BJTs, and gate turn-off thyristors, GTOs. Traditionally, MOSFETs have been used for low DC voltage or low power inverter designs. IGBTs have been used in medium to high power or high voltage inverter designs. GTOs have been used in very high power inverter designs.

For an efficient inverter, it is desirable to uses transistors that optimize conduction losses or switching losses. Conduction losses of a transistor are dominated by the internal on state resistance and depend, therefore, on the duty cycle of the transistor. Switching losses are affected, for instance, by a gate charge losses, by body diode conduction losses (i.e. conducting period just after and just before switching transition with zero gate voltage), body diode reverse recovery losses (i.e. losses resulting from reverse recovery of the slow body diode) and many other factors.

Due to the interdependency of conduction and switching losses of a transistor, it is usually necessary to decide for a particular transistor with an advantageous property (e.g. conduction losses) and adapt the surrounding circuitry (e.g. circuit for carrying the freewheeling current) so as to prevent the transistor from operating under disadvantageous conditions in order to arrive at an efficient power electronic switching circuit.

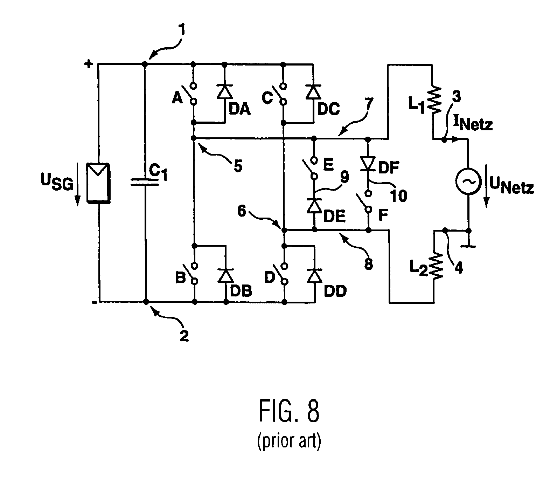

In DE 10 221 592 A1, an efficient power electronic switching circuit, namely an inverter for converting between a DC and an AC voltage is described. The proposed inverter, also shown in Fig. 8, includes a bridge circuit connected between a DC+ and a DC-input terminal 1, 2. The bridge circuit includes a first branch with a first and second switching element A, B and a second branch with a third and fourth switching element C, D. In the first branch, a first intermediate node 5 is connected via a first inductive element L₁ to a first AC output terminal 3, and in the second branch a second intermediated node 6 is connected via a second inductive element L₂ to a second AC output terminal 4.

The four switching element A, B, C and D allow for inverting the polarity of the voltage output to the AC output terminals 3, 4. For instance, by enabling the first switching element A, the voltage provided via the DC+ input terminal 1 is supplied via the first switching element A to the first intermediate node 5 and then via the first inductive element L₁ to the first AC output terminal. By synchronously enabling the fourth switching element D (i.e. together with the first switching element A), the voltage provided via the DC- input terminal 2 is supplied to the second AC output terminal 4 (i.e. via the fourth switching element D to the second intermediate node 6, then via the second inductive element L₂ to the second AC output terminal 4). Consequently, a voltage of a first polarity is supplied to the two AC output terminals.

Similarly, by enabling the second switching element B, the voltage provided via the DC-input terminal 2 is supplied via the second switching element B to the first intermediate node 5 and then via the first inductive element *L*₁ to the first AC output terminal 3. By synchronously enabling the third switching element C (i.e. together with the second switching element B), the voltage provided via the DC+ input terminal 1 is supplied to the second AC output terminal 4 (i.e. via the third switching element C to the second intermediate node 6, then via the second inductive element L₂ to the second AC output terminal 4). Consequently, a voltage of an inverted polarity (inverted with respect to the first polarity) is supplied to the two AC output terminals.

Hence, by alternatively switching the first and fourth switching element A, D and the second and third switching element B, C, an AC voltage is supplied to the two AC output terminals.

For providing intermediate voltage levels of a first polarity at the AC output terminals, the first and fourth switching elements A, D may be synchronously switched according to a predefined high-frequency switching pattern (e.g. based on a pulse width modulation, PWM, pattern) where the second and third switching elements B, C are maintained in an off switching state. The first and second inductive elements, *L₁,* L₂ allow for a supply of a sufficiently smooth and sine-shaped first half-wave (i.e. positive half-wave) of the first polarity at the AC output terminals.

For providing intermediate voltage levels of the inverted polarity (inverted with respect to the first polarity) at the AC output terminals, the second and third switching elements B, C may be synchronously switched according to a predefined high-frequency switching pattern (e.g. based on a pulse width modulation, PWM pattern) where the first and fourth switching elements A, D are maintained in an off switching state. Similarly, the first and second inductive *elements L₁ ,* L₂ allow for a supply of a sufficiently smooth and sine-shaped second half-wave (i.e. negative half-wave) of the inverted polarity at the AC output terminals.

The switching pattern (e.g. its frequency) may be adapted to comply with requirements to the public power grid or to isolated AC appliances (i.e. without connection to the public power grid).

At times when the inverter is controlled to provide the first half-wave at the AC output terminals, as described before, the first and fourth switching element A, D are synchronously switched on and off and the second and third switching elements B, C are maintained in an off switching state. Then, upon switching the first and fourth switching elements A, D to an off state (and the second and third switching element B, C are in an off switching state as well), the first and second inductive elements *L₁ ,* L₂ induce a freewheeling current into the inverter resisting the sudden drop of current (d*i*/d*t* is large therefore V is large) by using its stored magnetic field energy to create its own voltage. Same applies when the inverter is controlled to provide the second half-wave at the AC output terminals, however, with the freewheeling current of an opposite direction.

For preventing the freewheeling voltage from feedback towards the DC input terminals, the inverter includes a first and second switchable path 9, 10 between the first and the second intermediate node 5, 6, namely in parallel to a series circuit of the first inductive element L₁, the AC output terminals 3, 4, and the second inductive element L₂. When the first and second inductive elements *L₁,* L₂ induce a freewheeling current into the inverter, the first or the second switchable path 9, 10 can carry the freewheeling current preventing this current from feedback towards the DC input terminals.

In detail, the first switchable path 9 includes a fifth switching element E and a diode DE biased so as to carry the freewheeling current induced when providing a first half-wave at the AC output terminals and the second switchable path 10 includes a sixth switching element F and a diode DF biased so as to carry the freewheeling current induced when providing the second half-wave at the AC output terminals.

Due to the provision of the diodes within the first and second switchable paths, the fifth and sixth switching element E, F can be switched with the frequency of the AC output voltage. In other words, during the period when the inverter is controlled to provide the first half-wave at the AC output terminals, the fifth switching element E is switched to an on state (thereafter off), and during the period when the inverter is controlled to provide the second half-wave at the AC output terminals, the sixth switching element F is switched to an on state (thereafter off).

This inverter improves the efficiency as it prevents a freewheeling current from flowing towards the DC input terminals. The advantages thereof will become apparent from the following.

Generally, a body-diode is provided within each of the first, second, third and fourth switching element, indicated as diodes DA, DB, DC and DD in Fig. 8. The body diodes are reversely-biased with respect to each of the corresponding switching elements. Accordingly, the body diodes could carry a freewheeling current towards the DC input terminals 1, 2. However, such a freewheeling current would cause losses at the input capacitor *C*₁. Additionally, the freewheeling current flowing towards the DC input terminals 1, 2 would also cause reverse recovery losses at the body diodes DA, DB, DC and DD. Accordingly, due to the first and second switchable path 9 and 10 preventing the freewheeling current from flowing towards the DC input terminals the overall efficiency of the inverter increases.

However, the inverter is only efficient at real power, i.e. with the public power grid acting as a real load or with corresponding isolated AC appliances. In case of reactive power, a portion of power returns to the inverter in each cycle and negatively affects the efficiency of the inverter.

Assuming reactive power during a positive half-wave, a current is feedback into the inverter from the AC output terminals 3, 4 in an opposite direction to the voltage supplied at the output terminals. In detail, during the positive half-wave a current carrying reactive power flows in the direction from AC output terminal 3 via the first inductive element L₁ to intermediate node 5. In particular, diode DE prevents the reactive current from flowing via the first switchable path 9 to the AC output terminal 4. Instead, the current carrying reactive power flows from the intermediate node 5 via diode DA towards the DC input terminals 1, 2 and via diode DD and the second inductive element L₂ back to the AC output terminal 4.

Similarly, assuming reactive power during a negative half-wave, then a current carrying reactive power flows in clockwise direction and is carried by diodes DB and DC.

Consequently during reactive power, the current carrying reactive power causes losses at the DC input and causes reverse recovery losses at the corresponding switching elements. Accordingly, for future inverters, a further improvement of efficiency and the ability to handle reactive power is needed.

Further a related efficient power electronic switching circuits also includes an inverter for converting between a DC and an AC voltage. An exemplary inverter includes first phase-legs of MOS1, SIC1, MOS4 and SiC4 and second phase-legs of MOS2, SiC2, MOS3 and SiC3 connected in parallel between the two DC input terminals DC+, DC-. Such an exemplary inverter may be referred to as pseudo H bridge circuit.

The first phase-legs may provide a first half-wave of a first polarity to a pair of AC output terminals AC1, AC2. The second phase-legs may provide a second half-wave of an opposite polarity with respect to the first polarity to the pair of AC output terminals AC1, AC2. For example, the first phase-legs may provide a positive half-wave and the second phase-legs may provide a negative half-wave or vice versa. Accordingly, the first and the second phase-legs are asymmetric.

For providing a first half-wave, switching element MOS4 is controlled to be in an ON state for a time period corresponding to the first half wave of the modulated output at the AC output terminals. During real power, switching element MOS1 is controlled, for providing the first half-wave, according to a predefined high-frequency switching pattern (e.g. based on a pulse width modulation, PWM, pattern) so as to modulate the output according to sin(wt) at the AC output terminals. Accordingly, the output voltage is sin(wt) with unipolar modulation (i.e. only the switching element MOS1 modulates the output signal).

Furthermore, the exemplary inverter also allows for providing a first half-wave during reactive power. In particular, during reactive power the time period of providing the first half-wave subdivides into a real power period, where the polarity of the current and the voltage is the same, and a reactive power period, where the polarity of the current and the voltage is opposite to each other.

For a real power period, the switching element MOS4 is controlled to be in an ON state and the switching element MOS1 is controlled so as to modulate the output voltage as sin(wt) . This unipolar modulation pattern corresponds to modulation during real power.

For a reactive power period, the modulation pattern applied to the exemplary inverter changes to a bipolar modulation (i.e. both switching elements MOS1 and MOS4 modulate the output signal). Specifically, two different patterns are used in the MOS4, SiC4 branch and the MOS1, SiC1 branch.

Assuming a phase angle (ϕ) is required for reactive power when K₁=sin(ϕ) is reached, i.e. sin(wt) = K₁, then the switching element MOS4 is controlled so as to switch the output voltage with a function of 1-1/2 (K₁-sin(wt)). At the same time, the switching element MOS1 is controlled so as to continue providing the sine wave output voltage of the real power period, but with half of the amplitude 1/2.(K₁ + sin(wt)). The difference of phase outputs is 1/2. (K₁ + sin(wt))-1/2. (K₁- sin(ωt)) = sin(wt) equal to the line voltage.

For providing a second half-wave, switching element MOS3 is controlled to be in an ON state for a time period corresponding to the first half wave of the modulated output at the AC output terminals. During real power, switching element MOS2 is controlled, for providing the second half-wave, according to a predefined high-frequency switching pattern (e.g. based on a pulse width modulation, PWM, pattern) so as to modulate the output according to sin(ωt) at the AC output terminals. Accordingly, the output voltage is sin(ωt) with unipolar modulation (i.e. only the switching element MOS2 modulates the output signal).

Furthermore, the exemplary inverter also allows for providing a second half-wave during reactive power. For the real power period during reactive power, the switching element MOS3 is controlled to be in an ON state and the switching element MOS2 is controlled so as to modulate the output voltage as sin(ωt). The unipolar modulation pattern corresponds to modulation during real power. For the reactive power period during reactive power, two different patterns are used in the MOS3, SiC3 branch and the MOS2, SiC2 branch.

Assuming a phase angle ( ϕ ) is required for reactive power when K₁=sin(ϕ) is reached, i.e. sin(ωt) = K₁, then the switching element MOS3 is controlled so as to switch the output voltage with a function of 1-1/2 (K₁-sin(ωt)). At the same time, the switching element MOS2 is controlled so as to continue providing the sine wave output voltage of the real power period, but with half of the amplitude 1/2· (K₁ + sin(ωt)). The difference of phase outputs is 1/2·(K₁+sin(ωt))-1/2·(K₁-sin(ωt))=sin(ωt) equal to the line voltage.

With this definition of unipolar and bipolar modulation, bipolar modulation is used for *-ϕ<ωt<ϕ* and *PI()-ϕ<ωt<PI()+ϕ,* and unipolar modulation is used for *ϕ<ωt<PI()-ϕ* and *P*/*()+ϕ<ωt<2·P*/*()-ϕ.*

To keep switching losses low (like for unipolar modulation) the phase angle (ϕ) can be dynamically adjusted, so the modulation pattern can be pure unipolar modulation if no reactive power is required (ϕ=0). Mixed unipolar and bipolar modulation is used if reactive power is required (ϕ > 0).

As can be noted from the above, the exemplary inverter has the advantages of low switching losses, low common mode noise, and high switching frequency operation with MOSFETs at any power factor (-1 < cos(ϕ) < 1).

Advantageously, the exemplary inverter provides two branches for a first polarity of the current at any voltage (e.g. 1-2 quadrant, l>0, -DC<U<+DC) while the opposite polarity of the current with respect to the first polarity is covered by two other branches (e.g. remaining 3-4 quadrant, 1<0, -DC<U<+DC). In the embodiment, the branch including the switching element MOS1 and the diode SiC1 and the branch including the switching element MOS4 and the diode SiC4 are for use with the first polarity and the branch including the switching element MOS2 and the diode SiC2 and the branch including the switching element MOS3 and the diode SiC3 are for use with the opposite polarity.

The currents of different polarities are separated by separate inductors or the leakage inductance between the windings. The four inductive elements L1, L2, L3 and L4 are provided separating current polarities of the branches by the stray inductances.

However, the exemplary inverter of does not solve the common voltage problem (i.e. of providing a third intermediate voltage level e.g. V₌0) or allows for a fully symmetric modulation. Specifically, the exemplary inverter does not consider the freewheeling current introduced into the exemplary inverter by the inductive elements L1, L2, L3 and L4 while being switched at high frequency. Accordingly, for future inverters, a further improvement of efficiency and the ability of preventing the freewheeling current from flowing towards the two DC input terminals DC+, DC-, is needed.

In view of the above disadvantage, it is an object of the invention to improve the efficiency of an inverter for converting a DC into an AC voltage that can be used with reactive power.

Another object underlying the invention is solving the common voltage problem and allowing for fully symmetric modulation of the pseudo H bridge.

At least one of these objects is solved by the subject matter of the independent claims. Advantageous embodiments of the invention are subject to the dependent claims.

According to one exemplary implementation of the invention an inverter is provided including two DC input terminals (DC+, DC-) with a first and a second bridge circuit connected in parallel therebetween. The first bridge circuit is for providing a first half-wave of a first polarity to a pair of AC output terminals (AC1, AC2) and the second bridge circuit is for providing a second half-wave of an opposite polarity to the pair of AC output terminals. Each of the first and second bridge circuit includes a first and a second branch, each of which comprises at least a switching element and a reversely-biased diode, and including a third branch for switchable interconnecting a first intermediate node of the first branch to a second intermediate node of the second branch. Thereby, a first half-wave, provided between the first and second intermediate node of the first bridge circuit, is supplied via a first and a second inductive element to the pair of AC output terminals, and the second half-wave, provided between the first and second intermediate node of the second bridge circuit, is supplied via a third and a fourth inductive element to the pair of AC output terminals. At least one of the first, second, third or fourth inductive element is connecting the first intermediate node of the first bridge circuit to the first intermediate node of the second bridge circuit, and at least another of the first, second, third or fourth inductive element is connecting the second intermediate node of the first bridge circuit to the second intermediate node of the second bridge circuit.

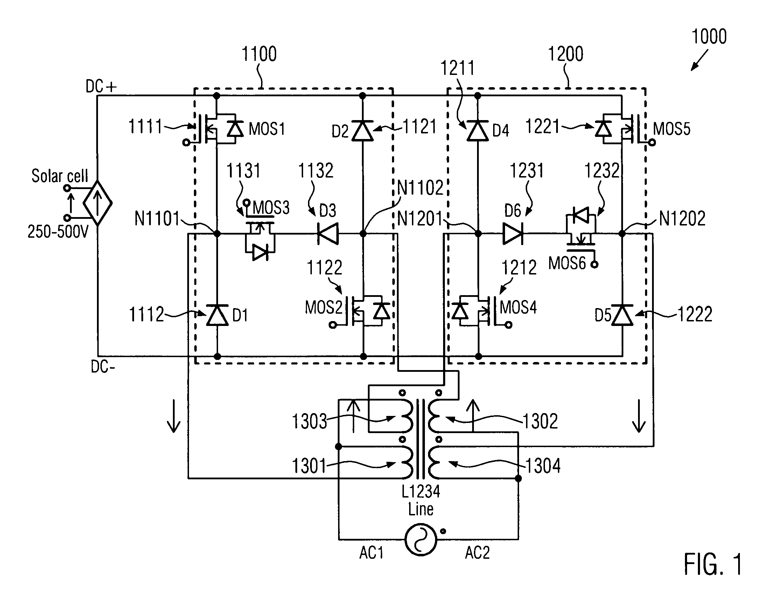

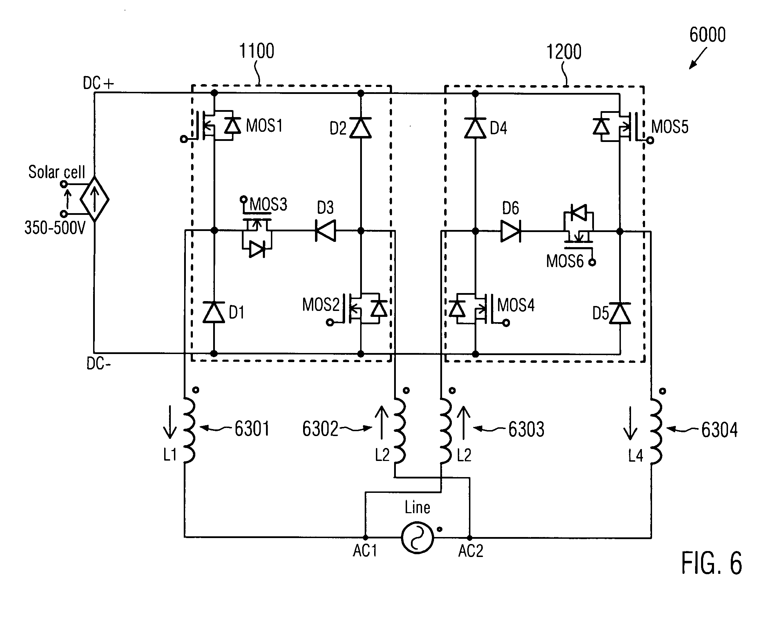

As can be readily appreciated from the following implementations, the first to fourth inductive elements may be realized as a single core with four identical windings (e.g. as shown in Fig. 1), as separate, identical inductors with a same number of windings (e.g. as shown in Fig. 6, or as any intermediate combination therebetween (e.g. as two separate common-mode choke elements, a first for the first bridge circuit, and a second for the second bridge circuit). In particular, the four inductive elements may be realized complying with the following two rules. Rule1: the connection between the first bridge circuit (e.g. positive current bridge), respectively the second bridge circuit (e.g. negative current bridge), and the pair of AC output terminals must be realized through inductive elements having same inductance values so as to cancel common voltage originating from switching of the inverter, and Rule 2, an interconnection between branches of the first and second bridge circuit must be realized via an inductive element so as to route away freewheeling current from MOSFET body diodes.

In one exemplary implementation, the third branch of the first bridge circuit includes a series circuit of a switching element and a diode configured for connecting the second intermediate node to the first intermediate node of the first bridge circuit, and the third branch of the second bridge circuit includes a series circuit of a switching element and a diode configured for connecting the first intermediate node to the second intermediate node of the second bridge circuit.

In another exemplary implementation, the third branch of the first bridge circuit and the third branch of the second bridge circuit use a single switching element for respectively interconnecting the first and second intermediate nodes and/or the first and the second intermediate nodes of the first and second bridge circuit.

In a more detailed implementation, the single switching element is connected so as supply current from the second intermediate node of the first bridge circuit or from the first intermediate node of the second bridge circuit to the first intermediate node of the first bridge circuit and to the second intermediate node of the second bridge circuit; and wherein a first and a second diode prevent current from flowing between the second intermediate node of the first bridge circuit or from the first intermediate node of the second bridge circuit and a third and a fourth diode prevent current from flowing between the first intermediate node of the first bridge circuit and the second intermediate node of the second bridge circuit.

In a further exemplary implementation, the first branch of the first bridge circuit includes the switching element and the reversely-biased diode for switching a voltage of the first polarity from a first of the two DC input terminals to the first intermediate node of the first bridge circuit while preventing voltage of the first polarity from draining towards the second of the two DC input terminals. The second branch of the first bridge circuit includes the switching element, the reversely-biased diode and another reversely-biased diode for switching a voltage of the opposite polarity from a second of the two DC input terminals to the second intermediate node of the first bridge circuit while preventing voltage of the opposite polarity from draining towards the first of the two DC input terminals. The third branch of the first bridge circuit includes a third switching element which together with the other diode of the second branch of the first bridge circuit allows for a freewheeling current to flow from the second intermediate node to the first intermediate node of the first bridging circuit. The first branch of the second bridge circuit) includes the switching element, the reversely-biased diode and another reversely-biased diode for switching a voltage of the opposite polarity from the second of the two DC input terminals to the first intermediate node of the second bridge circuit while preventing voltage of the opposite polarity from draining towards the first of the two DC input terminals. The second branch of the second bridge circuit includes the switching element and the reversely-biased diode for switching a voltage of the first polarity from a first of the two DC input terminals to the second intermediate node of second bridge circuit while preventing voltage of the first polarity from draining towards the second of the two DC input terminals. The third branch of the second bridge circuit includes a third switching element which together with the other diode of the first branch of the second bridge circuit allows for a freewheeling current to flow from the first intermediate node to the second intermediate node of the second bridging circuit.

In yet another exemplary implementation, the first branch of the first bridge circuit includes the switching element, another switching element and the reversely-biased diode for switching a voltage of the first polarity from a first of the two DC input terminals to the first intermediate node of the first bridge circuit while preventing voltage of the first polarity from draining towards the second of the two DC input terminals (DC+, DC-). The second branch of the first bridge circuit includes the switching element and the reversely-biased diode for switching a voltage of the opposite polarity from a second of the two DC input terminals to the second intermediate node of the first bridge circuit while preventing voltage of the opposite polarity from draining towards the first of the two DC input terminals. The third branch of the first bridge circuit includes a diode which together with the other switching element of the first branch of the first bridge circuit allows for a freewheeling current to flow from the second intermediate node to the first intermediate node of the first bridging circuit. The first branch of the second bridge circuit includes the switching element and the reversely-biased diode for switching a voltage of the opposite polarity from the second of the two DC input terminals to the first intermediate node of the second bridge circuit while preventing voltage of the opposite polarity from draining towards the first of the two DC input terminals. The second branch of the second bridge circuit includes the switching element another switching element and the reversely-biased diode for switching a voltage of the first polarity from a first of the two DC input terminals to the second intermediate node of the second bridge circuit while preventing voltage of the first polarity from draining towards the second of the two DC input terminals. The third branch of the second bridge circuit includes a diode which together with the other switching element of the second branch of the second bridge circuit allows for a freewheeling current to flow from the first intermediate node to the second intermediate node of the second bridging circuit.

In another more detailed implementation, the first inductive element is a first choke element, the second inductive element is a second choke element, the third inductive element is a third choke element and the fourth inductive element is a fourth choke element.

In a further more detailed implementation, the first inductive element and the second inductive element are configured as a common-mode choke element for passing differential current from the first intermediate node and the second intermediate node of the first bridge circuit to the pair of AC output terminals. The third inductive element and the fourth inductive element are configured as another common-mode choke element for passing differential current form the first intermediate node and the second intermediate node of the second bridge circuit to the pair of AC output terminals.

In yet another more detailed implementation, the common-mode choke element and the other common-mode choke element are configured with a same ferrite core such that the magnetic field induced therein reverses when alternatively providing the first half-wave of the first polarity to the pair of AC output terminals and providing the second half-wave of the opposite polarity to the pair of AC output terminals.

In an alternative, more detailed implementation, the first inductive element is connected to the first intermediate node of the first bridge circuit and to a first of the pair of AC output terminals, the second inductive element is connected to the second intermediate node of the first bridge circuit and to the second intermediate node of the second bridge circuit, the third inductive element is connected to the first intermediate node of the first bridge circuit and to the first intermediate node of the second bridge circuit, and the fourth inductive element is connected to the second intermediate node of the second bridge circuit and to a second of the pair of AC output terminals.

In a more detailed implementation, the first inductive element is a bidirectional filter, and the fourth inductive element is a bidirectional filter; and the second inductive element is a decoupling inductor, and the third inductive element is a decoupling inductor.

In an exemplary implementation, the switching elements of the inverter are metaloxide―semiconductor field-effect transistors.

In another exemplary implementation, the switching elements included in the first and second branch of the first and second bridge circuit are metal―oxide―semiconductor field-effect transistors, and the switching elements included in the third branch of the first and second bridge circuit are Insulated-gate bipolar transistors.

In a further exemplary implementation, the reversely-biased diode(s) of the first and second branch of the first bridge circuit and the reversely-biased diode(s) of the first and second branch of the second bridge circuit of the inverter are ultra fast diodes so as to reduce reverse recovery effects of body-diodes included in the switching elements included in the first and second branch of the first and second bridge circuit.

The accompanying drawings are incorporated into the specification and form a part of the specification to illustrate several embodiments of the present invention. These drawings, together with a description, serve to explain the principles of the invention.

The drawings are merely for the purpose of illustrating the preferred and alternative examples of how the invention can be made and used, and are not to be construed as limiting the invention to only the illustrated and described embodiments. Furthermore, several aspects of the embodiments may form - individually or in different combinations - solutions according to the present invention. Further features and advantages will be become apparent from the following more particular description of the various embodiments of the invention as illustrated in the accompanying drawings, in which like references refer to like elements, and wherein:
- **Fig. 1**: schematically shows an inverter circuit according to an exemplary embodiment of the invention;
- **Fig. 2**: schematically shows another inverter circuit according to another exemplary embodiment of the invention,
- **Fig. 3**: schematically shows a further inverter circuit according to a further exemplary embodiment of the invention,
- **Fig. 4**: schematically shows yet another inverter circuit according to yet another exemplary embodiment of the invention,
- **Fig. 5**: schematically shows a further inverter circuit according to a further exemplary embodiment of the invention,
- **Fig. 6**: schematically shows another inverter circuit according to another exemplary embodiment of the invention,
- **Fig. 7**: schematically shows a further inverter circuit according to a further exemplary embodiment of the invention, and
- **Fig. 8**: schematically shows a related inverter circuit.

Referring to Fig. 1, a schematic view of an inverter according to an exemplary embodiment of the invention is shown. The inverter of this embodiment has the ability to handle reactive load and may be referred to as 3 level pseudo H bridge inverter.

The inverter of this embodiment may be used with photovoltaic solar panels, uninterruptible power supplies, UPS, fuel cells and wind turbines or for DC-AC power conversion in general and may be used for a switched mode power supply, SMPS.

The inverter 1000 of the embodiment shown in Fig. 1, includes a first bridge circuit 1100 and a second bridge circuit 1200 connected in parallel between the two DC input terminals DC+, DC-. The first bridge circuit 1100 may provide a first half-wave of a first polarity to a pair of AC output terminals AC1, AC2. The second bridge circuit 1200 may provide a second half-wave of an opposite polarity with respect to the first polarity to the pair of AC output terminals AC1, AC2. For example, the first bridge circuit 1100 may provide a positive half-wave and the second bridge circuit 1200 may provide a negative half-wave or vice versa.

In detail, the first bridge circuit 1100 of the inverter 1000 includes a first branch and a second branch. The first branch thereof includes a series circuit of a switching element 1111 and a diode 1112. The node interconnecting the switching element 1111 and the diode 1112 of the first branch of the first bridge circuit 1100 is the first intermediate node N1101 thereof. The second branch includes a series circuit of a diode 1121 and a switching element 1122. The node interconnecting the diode 1121 and the switching element 1122 of the second branch of the first bridge circuit 1100 is the second intermediate node N1102 thereof. The first and the second intermediate nodes N1101, N1102 are switchable interconnected via a third branch.

In the inverter 1000 of this embodiment, the third branch of the first bridge circuit 1100 includes a series circuit of a switching element 1131 and a diode 1132. The switching element 1131 and the diode 1132 of the third branch of the first bridge circuit 1100 allow for interconnecting the first intermediate node N1101 and the second intermediate node N1102 such that current may flow from the second intermediate node N1102 to the first intermediate node N1101. The diode 1132 of the third branch of the first bridge circuit 1100 is configured so as to prevent current from flowing from the first intermediate node N1101 to the second intermediate node N1102.

Further, the second bridge circuit 1200 of the inverter 1000 also includes a first branch and a second branch. The first branch thereof includes a series circuit of a diode 1211 and a switching element 1212. The node interconnecting the diode 1211 and the switching element 1212 of the first branch of the second bridge circuit 1200 is the first intermediate node N1201 thereof. The second branch includes a series circuit of a switching element 1221 and a diode 1222. The node interconnecting the switching element 1221 and the diode 1222 of the second branch of the second bridge circuit 1200 is the second intermediate node N1202 thereof. The first and the second intermediate nodes N1201, N1202 are switchable interconnected via a third branch.

In the inverter 1000 of this embodiment, the third branch of the second bridge circuit 1200 includes a series circuit of a diode 1231 and a switching element 1232. The diode 1231 and switching element 1232 the of the third branch of the second bridge circuit 1200 allow for interconnecting the first intermediate node N1201 and the second intermediate node N1202 such that current may flow from the first intermediate node N1201 to the second intermediate node N1202. The diode 1231 of the third branch of the second bridge circuit 1200 is configured so as to prevent current from flowing from the second intermediate node N1202 to the first intermediate node N1201.

Further, the first and the second intermediate nodes N1101, N1102 of the first bridge circuit 1100 are respectively connected via a first and a second inductive element 1301, 1302 to the two AC output terminals AC1, AC2. Similarly, the first and the second intermediate nodes N1201, N1202 of the second bridge circuit 1200 are also respectively connected via a third and a fourth inductive element 1303, 1304 to the two AC output terminals AC1, AC2.

Accordingly, a first half-wave provided by the first bridge circuit 1100 between the first and the second intermediate node N1101, N1102 of the first bridge circuit 1100 may be supplied via the first and the second inductive element 1301, 1302 to the AC output terminals AC1, AC2. A second half-wave provided by the second bridge circuit 1200 between the first and the second intermediate node N1201, N1202 may be supplied via the third and the fourth inductive element 1303, 1304 to the AC output terminals AC1, AC2.

In the exemplary realization of the inverter 1000 of this embodiment shown in Fig. 1, the first and the fourth inductive elements 1301, 1304 are configured as a common-mode choke element for passing differential current from the first intermediate node N1101 of the first bridge circuit 1100 and from the second intermediate node N1202 of the second bridge circuit 1200 to the pair of AC output terminals AC1, AC2.

In particular, a winding of the first inductive element 1301 of the common-mode choke element is provided in an opposite direction with respect to a winding the fourth inductive element 1304 of the same common mode choke element. In other words, the magnetic field induced by the first inductive element 1301 when supplying the first half-wave and the magnetic field induced by the fourth inductive element 1304 when supplying the second half-wave are oriented in a same direction.

Similarly, the second and third inductive element 1302, 1303 are configured as another common-mode choke element for passing differential current from the first intermediated node N1201 of the second bridge circuit 1200 and from the second intermediate node N1102 of the first bridge circuit 1100 to the pair of AC output terminals AC1, AC2.

In particular, a winding of the second inductive element 1302 of the other common-mode choke element is provided in an opposite direction with respect to a winding the third inductive element 1303 of the same common mode choke element. In other words, the magnetic field induced by the second inductive element 1302 when supplying the first half-wave and the magnetic field induced by the third inductive element 1303 when supplying the second half-wave are oriented in a same direction.

The common mode choke element including the first and the fourth inductive element 1301, 1304 and the other common mode choke element including the second and the third inductive element 1302, 1303 share a same ferrite core. In particular, the common mode choke element and the other common mode choke element are combined such that the magnetic field induced in the ferrite core when supplying the first half-wave and when supplying the second half-wave is always oriented in a same direction.

Consequently, due to a realization of the inductive elements as common-mode choke elements, the inverter according to this embodiment prevents from a common voltage evoked when switching the switching elements at the predefined high-frequency switching pattern (e.g. based on a pulse width modulation, PWM, pattern).

In an alternative exemplary realization of this embodiment, the first and the second inductive elements are configured as a common-mode choke element for passing differential current from the first intermediate node and the second intermediated node of the first bridge circuit and to the pair of AC output terminals.

In particular, a winding of the first inductive element of the common-mode choke element is provided in an opposite direction with respect to a winding the second inductive element of the same common mode choke element. In other words, the magnetic field induced by the first inductive element and the magnetic field induced by the second inductive element when supplying the first half-wave are oriented in a same direction.

Similarly, the third and fourth inductive element are configured as another common-mode choke element for passing differential current from the first intermediated node and the second intermediate node N1102 of the second bridge circuit to the pair of AC output terminals.

In particular, a winding of the third inductive element of the other common-mode choke element is provided in an opposite direction with respect to a winding the fourth inductive element of the same common mode choke element. In other words, the magnetic field induced by the third inductive element and the magnetic field induced by the fourth inductive element when supplying the second half-wave are oriented in a same direction.

The common mode choke element including the first and the second inductive element and the other common mode choke element including the third and the fourth inductive element share a same ferrite core. In particular, the common mode choke element and the other common mode choke element are combined such that the magnetic field induced in the ferrite core when supplying the first half-wave and when supplying the second half-wave is always oriented in a same direction.

In a further alternative exemplary realization of this embodiment, any three of the four inductive elements are configured as a three-winding common-mode choke element (i.e. common choke 3 windings inductor); and the fourth inductive element is configured as a separate choke element, wherein the three-winding common-mode choke element and the separate choke element have a same inductance value, e.g. are provided with a same number of windings.

For providing a first half-wave (e.g. positive half-wave) to the AC output terminals, the switching element 1111 of the first branch of the first bridge circuit 1100 and the switching element 1122 of the second branch of the first bridge circuit 1100 are synchronously switched according to a predefined high-frequency switching pattern (e.g. based on a pulse width modulation, PWM, pattern), where the switching elements of the second bridge circuit 1200 are maintained in a off switching state.

At time intervals when the switching element 1111 of the first branch and the switching element 1122 of the second branch of the first bridge circuit 1100 are switched to be in an on state, a first voltage supplied via the first DC+ input terminal is propagated to the first intermediate node N1101 and at the same time a second voltage (i.e. inverted polarity with respect to the first voltage) supplied via the second DC- input terminal is propagated to the second intermediate node N1102 of the first bridge circuit 1100. Further, first and second inductive elements 1301, 1302 allow for a sufficiently smooth and sine-shaped first half-wave (e.g. positive half-wave) of the polarity of the first voltage at the AC output terminals.

In other words, at time intervals when the switching element 1111 of the first branch and the switching element 1122 of the second branch of the first bridge circuit 1100 are switched to be in an off state, a freewheeling current is induced by the first and second inductive elements 1301, 1302 into the inverter 1000. In particular, the freewheeling current results from the first and second inductive elements 1301, 1302 resisting the sudden drop of current by using stored magnetic field energy to create its own voltage. This freewheeling current is provided to the intermediate nodes N1101, N1102 of the first bridge circuit 1100.

Advantageously, the third branch of the first bridge circuit 1100 includes a switching element 1131 which is switched to be in an on state during almost the entire time period of the first half-wave. Accordingly, a freewheeling current provided by the first and second inductive elements 1301, 1302 to the respective first and second intermediate node N1101, N1102 of the first bridge circuit may be carried via the third branch, namely the switching element 1131 and diode 1132 to so as to flow from the second intermediate node N1102 of the first bridge circuit 1100 to the first intermediate node N1202 thereof. This control of the switching element 1131 of third branch of the first bridge circuit 1100 may be advantageously used in case of real power.

Alternatively, the switching element 1131 of the third branch of the first bridge circuit 1100 may be switched on/off inversely with respect to the synchronous switching of the switching element 1111 of the first branch and the switching element 1122 of the second branch of the first bridge circuit 1100. In particular, inverse switching in the context of the invention means that when the switching element 1131 of the third branch is switched to an on state, the switching element 1111 of the first branch and the switching element 1122 of the second branch are switched to be in an off state and vice versa. This control of the switching element 1131 of third branch of the first bridge circuit 1100 may also be advantageously used in case of reactive power.

Consequently, for a first half-wave, the third branch of the first bridge circuit 1100 of the inverter 1000 of this embodiment carries the freewheeling current in case of real power preventing the freewheeling current from flowing towards the two DC input terminals DC+, DC-.

It is an advantage to the configuration of the inverter 1000 that the freewheeling current (i.e. originating from the first and second inductive element 1301, 1302) is prevented from flowing into the second bridge circuit 1200. In particular, the first and second inductive element 1301, 1302 are connected via the respective AC output terminals AC1, AC2 and via a third and a fourth inductive element 1303, 1304 to the first and second intermediate node N1201, N1202 of the second bridge circuit. In case of a freewheeling current, the third and fourth inductive element 1303 and 1304 act as a filter preventing the freewheeling current from flowing into the second bridge circuit 1200.

For providing a second half-wave second half-wave (e.g. negative half-wave) of the polarity of the inverted voltage at the AC output terminals, the switching element 1212 of the first branch of the second bridge circuit 1200 and the switching element 1221 of the second branch of the second bridge circuit 1200 are synchronously switched according to a predefined high-frequency switching pattern (e.g. based on a pulse width modulation, PWM, pattern), where the switching elements of the first bridge circuit 1100 are maintained in a off switching state.

At time intervals when the switching element 1212 of the first branch and the switching element 1221 of the second branch of the second bridge circuit 1200 are switched to be in an ON state, a first voltage, supplied via the first DC+ input terminal, is propagated to the second intermediate node N1202 and at the same time an second voltage (i.e. inverted polarity with respect to the first voltage), supplied via the second DC- input terminal, is propagated to the first intermediate node N1201 of the second bridge circuit 1200. Further, third and fourth inductive elements 1303, 1304 allow for a sufficiently smooth and sine-shaped second half-wave (e.g. negative half-wave) of the polarity of the inverted voltage at the AC output terminals.

In other words, at time intervals when the switching element 1212 of the first branch and the switching element 1221 of the second branch of the second bridge circuit 1200 are switched to be in an off state, a freewheeling current is induced by the third and fourth inductive elements 1303, 1304 into the inverter 1000. In particular, the freewheeling current results from the third and fourth inductive elements 1303, 1304 resisting the sudden drop of current by using stored magnetic field energy to create its own voltage. This freewheeling current is provided to the intermediate nodes N1202, N1201 of the second bridge circuit 1200.

Advantageously, the third branch of the second bridge circuit 1200 includes a switching element 1232 which is switched to be in an ON state during the almost the entire time period of the first half-wave. Accordingly, a freewheeling current provided by the third and fourth inductive elements 1303, 1304 to the respective first and second intermediate node N1201, N1202 of the second bridge circuit 1200 may be carried via the third branch, namely the switching element 1232 and diode 1231 included in the third branch of the second bridge circuit 1200, so as to flow from the first intermediate node N1201 of the first bridge circuit 1200 to the second intermediate node N1202 thereof. This control of the switching element 1131 of third branch of the first bridge circuit 1100 may be advantageously used in case of real power.

Alternatively, the switching element 1232 of the third branch of the second bridge circuit 1200 may be switched on/off inverse to the synchronous switching of the switching element 1212 of the first branch and the switching element 1221 of the second branch of the first bridge circuit 1200. In particular, inverse switching in the context of the invention means that when the switching element 1232 of the third branch is switched to an on state, the switching element 1212 of the first branch and the switching element 1221 of the second branch are switched to be in an off state and vice versa. This control of the switching element 1131 of third branch of the first bridge circuit 1100 may also be advantageously used in case of reactive power.

Consequently, for a second half-wave the third branch of the first bridge circuit 1200 of the inverter 1000 of this embodiment carries the freewheeling current in case of real power preventing the freewheeling current from flowing towards the two DC input terminals DC+, DC-.

It is an advantage of the configuration of the inverter 1000 that the freewheeling current (i.e. originating from the third and fourth inductive element 1303, 1304) is prevented from flowing into the first bridge circuit 1100. In particular, the third and fourth inductive element 1303, 1304 are connected via the respective AC output terminals AC1, AC2 and via the first and second inductive elements 1301, 1302 to the first and second intermediate node N1101, N1102 of the first bridge circuit. In case of a freewheeling current, the first and second inductive element 1301 and 1302 act as a filter preventing the freewheeling current from flowing into the first bridge circuit 1100.

As already indicated, the inverter 1000 of this embodiment is also usable with reactive power. In other words, the configuration of the inverter 1000 of this embodiment allows for a usage with reactive power without drawbacks to the overall efficiency. In case of reactive power, a portion of power returns to the inverter 1000 in each cycle which does not negatively affect the efficiency of the inverter of this embodiment.

In order to actively control the reactive power for a first half-wave, the switching element 1131 of the third branch of the first bridge circuit 1100 is switched according to a predefined high-frequency switching pattern (e.g. based on a pulse width modulation, PWM, pattern). For the second half-wave, the reactive power is actively controlled by switching the switching element 1232 of the third branch of the second bridge circuit 1200 according to a predefined high-frequency switching pattern (e.g. based on a pulse width modulation, PWM, pattern).

Assuming reactive power during a first half-wave (e.g. positive half-wave), a current is feedback into the inverter 1000 from the pair of AC output terminals AC1, AC2 in an opposite direction to the voltage supplied at the output terminals. In detail, during the supply of the first half-wave a current carrying reactive power is controlled by switching the switching element 1131 of the third branch of the first bridge circuit 1100, such that the current flows in the direction from AC output terminal AC2 via the second inductive element 1302 to second intermediate node N1102 of the first bridge circuit 1100. This current is then carried from the second intermediate node N1102 via the third branch, namely via diode 1132 and switching element 1131 of the third branch, to the first intermediate node N1101 of the first bridge circuit. Then, this current is conducted via the first inductive element 1301 from the first intermediate node N1101 of the first bridge circuit 1100 to the AC output terminal AC1.

Advantageously, the configuration of the inverter 1000 prevents during the first half-wave the current carrying reactive power from flowing into the second bridge circuit. In particular the provision of the third an fourth inductive element 1303, 1304 interconnecting the pair of AC output terminals to the respective first and second intermediate nodes N1201, N1202 of the second bridge circuit prevent the current to flow during the first half-wave into the second bridge because there is no voltage difference to drive or change a current through the third and fourth inductive elements.

Further, assuming reactive power during a second half-wave (e.g. negative half-wave), a current is feedback into the inverter 1000 from the pair of AC output terminals AC1, AC2 in an opposite direction to the voltage supplied at the output terminals. In detail, during the supply of the second half-wave a current carrying reactive power is controlled by switching the switching element 1232 of the third branch of the second bridge circuit 1200, such that the current flows in the direction from AC output terminal AC1 via the third inductive element 1303 to first intermediate node N1201 of the second bridge circuit 1200. This current is then carried from the first intermediate node N1201 via the third branch, namely via diode 1231 and switching element 1232 of the third branch, to the second intermediate node N1202 of the second bridge circuit. Then, this current is conducted via the fourth inductive element 1304 from the second intermediate node N1202 of the second bridge circuit 1200 to the AC output terminal AC2.

Similarly, the configuration of the inverter 1000 prevents during the second half-wave the current carrying reactive power from flowing into the first bridge circuit. In particular the provision of the first an second inductive element 1301, 1302 interconnecting the pair of AC output terminals to the respective first and second intermediate nodes N1101, N1102 of the first bridge circuit prevent the current to flow during the second half-wave into the second bridge because there is no voltage difference to drive or change a current through the first and second inductive elements.

Consequently, the configuration of the inverter 1000 of this embodiment prevents the current carrying reactive power from flowing towards the DC input terminals but actively controls this current by switching the switching element 1131 of the third branch of the first bridge circuit 1100 for a first half-wave and by switching the switching element 1232 of the third branch of the second bridge circuit 1200 for the second half wave.

As side note, it shall be mentioned that a freewheeling current to the reactive power during the first half-wave is carried from the AC output terminals via the second inductive element 1302 to the second intermediate node N1102 of the first bridge circuit, then via diode 1121 of the second branch of the first bridge circuit to the DC input terminal DC+, DC- and then via the diode 1112 of the first branch of the first bridge circuit to the first intermediate node N1101 and then via the first inductive element 1301 to the AC output terminals. Similarly, during a second half-wave, a freewheeling current to the reactive power is carried from the AC output terminals via the third inductive element 1303 to the first intermediate node N1201 of the second bridge circuit, then via diode 11211 of the first branch of the second bridge circuit to the DC input terminal DC+, DC- and then via the diode 1222 of the second branch of the second bridge circuit to the second intermediate node N1202 of the second bridge circuit and then via the fourth inductive element 1304 to the AC output terminals.

Accordingly, the freewheeling current to reactive power is carried by diodes 1112 and 1121 of the first bridge circuit 1100 or diodes 1211 and 1222 of the second bridge circuit 1200 and not via the body diodes of the switching elements of the respective other bridge circuit 1200 and 1100. Thereby, reverse recovery losses can be avoided.

Yet, since the amount of reactive power in common appliances is far lower compared to the amount of real power and, furthermore, the freewheeling current to the reactive power only carries a small fraction of the reactive power, this effect can be considered as a negligible impairment to the efficiency of the inverter 1000 of this embodiment..

Nevertheless, usability with reactive power is becoming more and more important. Recent requirements to solar inverters in the category of >3kW include a LVRT (Low voltage ride through) capability. For a LVRT capability, the inverter has to withstand an AC Line=0 V (mains shortage) condition and cos(ϕ) = 0, full reactive power condition too.

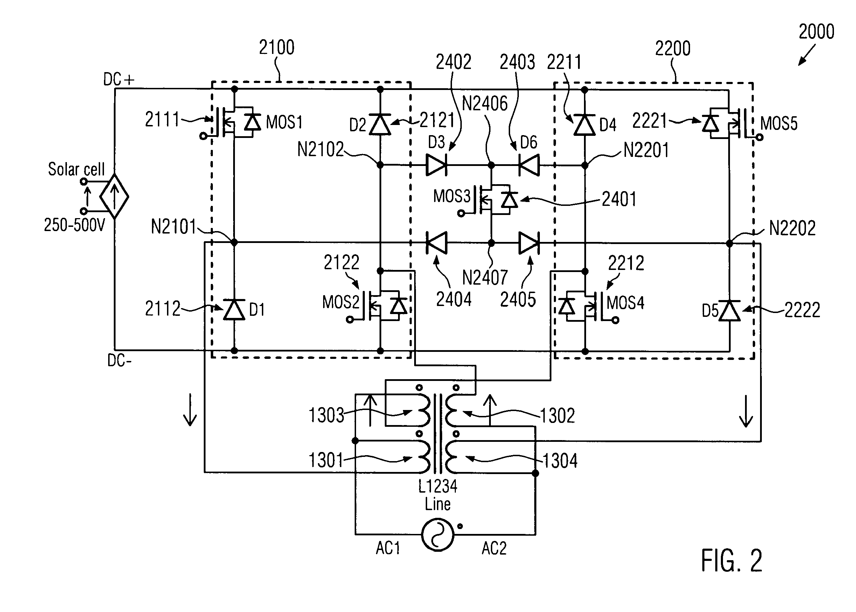

Referring now to Fig. 2, an inverter 2000 according to another exemplary embodiment of the invention is shown. The inverter of this embodiment has the ability to handle reactive load and may be referred to as 3 level single switch neutral clamp inverter.

The inverter 2000 of this embodiment is based on the inverter 1000 of Fig. 1 where corresponding parts are given corresponding reference numerals and terms. The detailed description of corresponding parts has been omitted for reasons of conciseness.

The inverter 2000 of this embodiment includes a first and a second bridge circuit 2100, 2200 which are different from the first and second bridge circuit 1100, 1200 of the inverter 1000, however, provide a same functionality while reducing the number of switching elements required.

In detail, the first bridge circuit 2100 and the second bridge circuit 2200 are connected in parallel between the two DC input terminals DC+, DC-. The first bridge circuit 2100 may provide a first half-wave of a first polarity to a pair of AC output terminals AC1, AC2. The second bridge circuit 2200 may provide a second half-wave of an opposite polarity with respect to the first polarity to the pair of AC output terminals AC1, AC2. For example, the first bridge circuit 2100 may provide a positive half-wave and the second bridge circuit 2200 may provide a negative half-wave or vice versa.

The first bridge circuit 2100 of the inverter 2000 includes a first branch and a second branch. The first branch thereof includes a series circuit of a switching element 2111 and a diode 2112. The node interconnecting the switching element 2111 and the diode 2112 of the first branch of the first bridge circuit 2100 is the first intermediate node N2101 thereof. The second branch includes a series circuit of a diode 2121 and a switching element 2122. The node interconnecting the diode 2121 and the switching element 2122 of the second branch of the first bridge circuit 2100 is the second intermediate node N2102 thereof. The first and the second intermediate nodes N2101, N2102 are switchable interconnected via a third branch.

Further, the second bridge circuit 2200 of the inverter 2000 also includes a first branch and a second branch. The first branch thereof includes a series circuit of a diode 2211 and a switching element 2212. The node interconnecting the diode 2211 and the switching element 2212 of the first branch of the second bridge circuit 1200 is the first intermediate node N2201 thereof. The second branch includes a series circuit of a switching element 2221 and a diode 2222. The node interconnecting the switching element 2221 and the diode 2222 of the second branch of the second bridge circuit 2200 is the second intermediate node N2202 thereof. The first and the second intermediate nodes N2201, N2202 are switchable interconnected via a third branch.

In the inverter 2000, the third branch of the first bridge circuit 2100 and the third branch of the second bridge circuit 2200 are joined so as to use a single switching element 2401 for respectively interconnecting the first and second intermediate nodes N2101, N2102 and/or the first and the second intermediate nodes N2201, N2202 of the first and second bridge circuit 2100, 2200.

In particular, the single switching element 2401 is connected so as supply current from the second intermediate node N2102 of the first bridge circuit 2100 or from the first intermediate node N1201 of the second bridge circuit 2200 to the first intermediate node N21 01 of the first bridge circuit 2100 and to the second intermediate node N2202 of the second bridge circuit 2200. In particular, a first and a second diode 2402, 2403 prevent current from flowing between the second intermediate node N2102 of the first bridge circuit 2100 and the first intermediate node N2201 of the second bridge circuit 2200. A third and a fourth diode 2404, 2405 prevent current from flowing between the first intermediate node N2101 of the first bridge circuit 1100 and the second intermediate node N2202 of the second bridge circuit 1200.

In other words, the second intermediate node N2102 of the first bridge circuit 2100 is interconnected by a series circuit of the first and the second diode 2402, 2403 to the first intermediate node N2201 of the second bridge circuit 2200 such that current can only flow from the second intermediate node N2102 via the first diode 2402 and from the first intermediate node N2201 via the second diode 2403 to a third intermediate node N2406. The third intermediate node N2406 is the node directly connecting the first and the second diode 2402, 2403.

Similarly, the first intermediate node N2101 of the first bridge circuit 2100 is interconnected by a series circuit of the third and the fourth diode 2404, 2405 to the second intermediate node N2202 of the second bridge circuit such that current can only from a fourth intermediate node N2407 via the third diode 2404 to the first intermediate node N2101 of the first bridge circuit 2100 or via the fourth diode to the second intermediate node N2202 of the second bridge circuit 2200. The fourth intermediate node N2407 is the node directly connecting the third and fourth diode 2404, 2405.

Further, the first and the second intermediate nodes N2101, N2102 of the first bridge circuit 2100 are respectively connected via a first and a second inductive element 1301, 1302 to the two AC output terminals AC1, AC2. Similarly, the first and the second intermediate nodes N2201, N2202 of the second bridge circuit 2200 are also respectively connected via a third and a fourth inductive element 1303, 1304 to the two AC output terminals AC1, AC2.

Accordingly, a first half-wave provided by the first bridge circuit 2100 between the first and the second intermediate node N2101, N2102 of the first bridge circuit 2100 may be supplied via the first and the second inductive element 1301, 1302 to the AC output terminals AC1, AC2. A second half-wave provided by the second bridge circuit 2200 between the first and the second intermediate node N2201, N2202 may be supplied via the third and the fourth inductive element 1303, 1304 to the AC output terminals AC1, AC2.

For providing the first and the second half wave, the single switching element 2401 of the inverter 2000 is switched to be in an on state at the same times when the switching element 1131 of the third path of the first bridge circuit 1100 of the inverter 1000 is switched to be in an on state and at the same times when the switching element 1231 of the third path of the second bridge circuit 1200 of the inverter 1000 is switched to be in an on state. Thereby, the functionality of the inverter 2000 is the same as that of the inverter 1000 of Fig. 1.

In the inverter 2000, the same first, second third and fourth inductive element 1301, 1302, 1303 and 1304 are provided as in the inverter 1000 show in Fig. 1. Thus, the inverter 2000 of this embodiment also provides in case of real power for the advantage of preventing the freewheeling current from flowing towards the two DC input terminals DC+, DC- and in case of reactive power, preventing the freewheeling current from causing reverse recovery losses at the switching elements within the first and second bridge circuit.

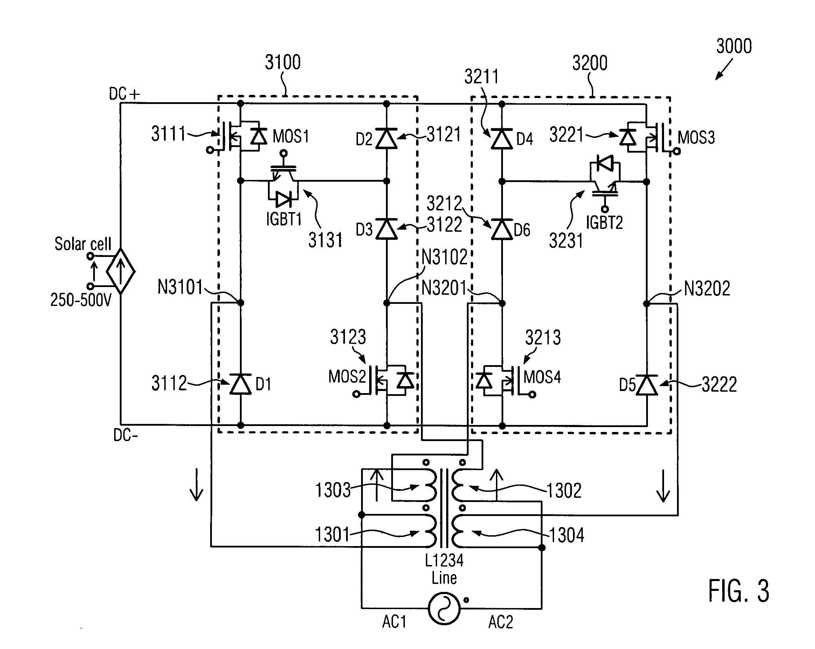

Referring now to Fig. 3, an inverter 3000 according to another exemplary embodiment of the invention is shown. The inverter of this embodiment has the ability to handle reactive load and may be referred to as 3 level pseudo 6 diode bridge inverter.

The inverter 3000 of this embodiment is based on the inverter 1000 of Fig. 1 where corresponding parts are given corresponding reference numerals and terms. The detailed description of corresponding parts has been omitted for reasons of conciseness.

The inverter 3000 of this embodiment includes a first and a second bridge circuit 3100, 3200 which are different from the first and second bridge circuit 1100, 1200 of the inverter 1000, however, provide a same functionality while reducing the conduction losses when switching the freewheeling current and/or reactive power with the first and of the second bridge circuit 3100, 3200.

In detail, the first bridge circuit 3100 and the second bridge circuit 3200 are connected in parallel between the two DC input terminals DC+, DC-. The first bridge circuit 3100 may provide a first half-wave of a first polarity to a pair of AC output terminals AC1, AC2. The second bridge circuit 3200 may provide a second half-wave of an opposite polarity with respect to the first polarity to the pair of AC output terminals AC1, AC2. For example, the first bridge circuit 3100 may provide a positive half-wave and the second bridge circuit 3200 may provide a negative half-wave or vice versa.

The first bridge circuit 3100 of the inverter 3000 includes a first branch and a second branch both connected in parallel between the two DC input terminals DC+, DC-. The second bridge circuit 3200 of the inverter 3000 also includes a first branch and a second branch wherein the first branch and the second branch are also connected in parallel between the two DC input terminals DC+, DC-.

The first branch of the first bridge circuit 3100 includes a series circuit of a switching element 3111 and a diode 3112. The node interconnecting the switching element 3111 and the diode 3112 of the first branch of the first bridge circuit 3100 is the intermediate node N31 01 thereof.

The second branch of the first bridge circuit 3100 includes a series circuit of a diode 3121, another diode 3122 and a switching element 3123. The node interconnecting the other diode 3122 and the switching element 3123 of the second branch of the first bridge circuit 3100 is the second intermediate node N3102 thereof. The first and the second intermediate nodes N3101, N3102 are switchable interconnected via a third branch.

In detail, the first branch of the first bridge circuit 3100 allows for switching a voltage of the first polarity from a first of the two DC input terminals DC+, DC- to the first intermediate node N3101 of the first bridge circuit 3100 while preventing voltage of the first polarity from draining towards the second of the two DC input terminals DC+, DC-.

Similarly, the second branch of the first bridge circuit 3100 allows for switching a voltage of the opposite polarity from a second of the two DC input terminals DC+, DC-to the second intermediate node N3102 of the first bridge circuit 3100 while preventing voltage of the opposite polarity from draining towards the first of the two DC input terminals DC+, DC-.

Further, the third branch of the first bridge circuit 3100 includes a switching element 3131. The switching element 3131 interacts with the other diode 3122 of the second branch of the first bridge circuit 3100 so as to allow for a freewheeling current to flow from the second intermediate node N3102 to the first intermediate node N3101 of the first bridging circuit 3100.

The first branch of the second bridge circuit 3200 includes a series circuit of a diode 3211, another diode 3212 and a switching element 3213. The node interconnecting the other diode 3212 and the switching element 3213 of the first branch of the second bridge circuit 3200 is the intermediate node N3201 thereof.

The second branch of the second bridge circuit 3200 includes a series circuit of a switching element 3221 and a diode 3222. The node interconnecting the switching element 3221 and the diode 3222 of the second branch of the second bridge circuit 3200 is the second intermediate node N3202 thereof. The first and the second intermediate nodes N3201, N3202 are switchable interconnected via a third branch.

In detail, the first branch of the second bridge circuit 3200 allows for switching a voltage of the opposite polarity from the second of the two DC input terminals (DC+, DC-) to the first intermediate node N3201 of the second bridge circuit 3200 while preventing voltage of the opposite polarity from draining towards the first of the two DC input terminals DC+, DC-.

Similarly, the second branch of the second bridge circuit 3200 allows for switching a voltage of the first polarity from a first of the two DC input terminals DC+, DC- to the second intermediate node N3202 of second bridge circuit 3200 while preventing voltage of the first polarity from draining towards the second of the two DC input terminals DC+, DC-.

Further, the third branch of the second bridge circuit 3200 includes a switching element 3231. The switching element 3231 interacts with the other diode 3212 of the first branch of the second bridge circuit 3200 so as to allow for a freewheeling current to flow from the first intermediate node N3201 to the second intermediate node N3202 of the second bridging circuit 3200.

For providing the first and the second half-wave, the switching elements of the first bridge circuit 3100 of the inverter 3000 are controlled in a same manner as the respective switching elements of the first bridge circuit 1100 of the inverter 1000 and the switching elements of the second bridge circuit 3200 of the inverter 3000 are controlled in a same manner as the respective switching elements of the second bridge circuit 1200 of the inverter 1000. Thereby, the functionality of the inverter 3000 is the same as that of the inverter 1000 of Fig. 1.

In the inverter 3000, a same first, second third and fourth inductive element 1301, 1302, 1303 and 1304 are provided as in the inverter 1000 show in Fig. 1. Thus, the inverter 3000 of this embodiment also provides in case of real power for the advantage of preventing the freewheeling current from flowing towards the two DC input terminals DC+, DC- and in case of reactive power, preventing the freewheeling current from causing reverse recovery losses at the switching elements within the first and second bridge circuit.

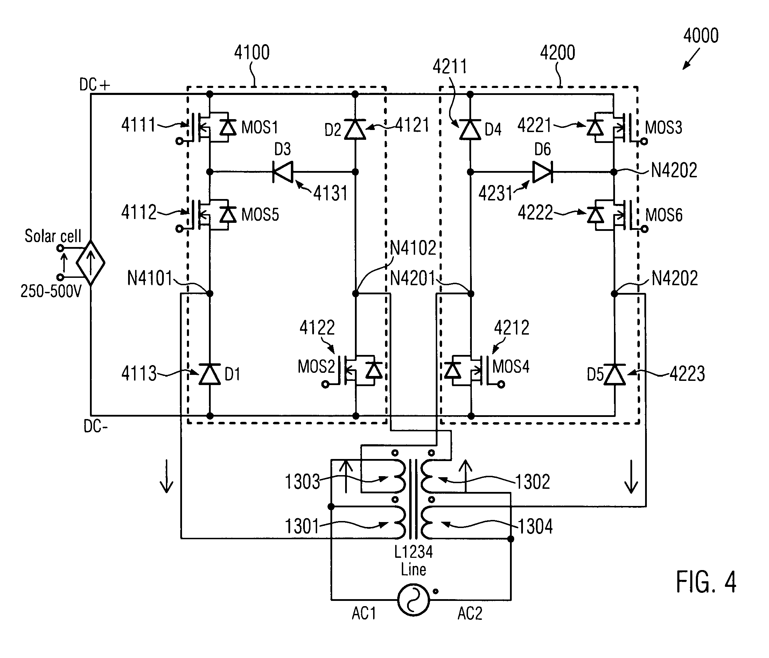

Referring now to Fig. 4, an inverter 4000 according to another exemplary embodiment of the invention is shown. The inverter of this embodiment has the ability to handle reactive load and may be referred to as 3 level pseudo 6 MOS-FET bridge inverter.

The inverter 4000 of this embodiment is based on the inverter 1000 of Fig. 1 where corresponding parts are given corresponding reference numerals and terms. The detailed description of corresponding parts has been omitted for reasons of conciseness.

The inverter 4000 of this embodiment includes a first and a second bridge circuit 4100, 4200 which are different from the first and second bridge circuit 1100, 1200 of the inverter 1000, however, provide a same functionality.

As will be apparent from the following description, the inverter 4000 provides for the advantage of including only three devices in the commutation path (e.g. the first and second branch of the respective second and first bridge circuit 4100, 4200) and switching element 4222 may be controlled to be continuously conducting (i.e. ON state) during the first half-wave so as to allow for a low voltage drop thereof, and similarly, switching element 4112 may be controlled to be continuously conducting (i.e. ON state) during the second half-wave so as to allow for a low voltage drop thereof as well.

In detail, the first bridge circuit 4100 and the second bridge circuit 4200 are connected in parallel between the two DC input terminals DC+, DC-. The first bridge circuit 4100 may provide a first half-wave of a first polarity to a pair of AC output terminals AC1, AC2. The second bridge circuit 4200 may provide a second half-wave of an opposite polarity with respect to the first polarity to the pair of AC output terminals AC1, AC2. For example, the first bridge circuit 4100 may provide a positive half-wave and the second bridge circuit 4200 may provide a negative half-wave or vice versa.

The first bridge circuit 4100 of the inverter 4000 includes a first branch and a second branch both connected in parallel between the two DC input terminals DC+, DC-. The second bridge circuit 4200 of the inverter 4000 also includes a first branch and a second branch wherein the first branch and the second branch are also connected in parallel between the two DC input terminals DC+, DC-.

The first branch of the first bridge circuit 4100 includes a series circuit of a switching element 4111, another switching element 4112 and a diode 4113. The node interconnecting the other switching element 4112 and the diode 4113 of the first branch of the first bridge circuit 4100 is the intermediate node N41 01 thereof.

The second branch of the first bridge circuit 4100 includes a series circuit of a diode 4121 and a switching element 4122. The node interconnecting the diode 4121 and the switching element 4122 of the second branch of the first bridge circuit 4100 is the second intermediate node N4102 thereof. The first and the second intermediate nodes N4101, N4102 are switchable interconnected via a third branch.

In detail, the first branch of the first bridge circuit 4100 allows for switching a voltage of the first polarity from a first of the two DC input terminals DC+, DC- to the first intermediate node N4101 of the first bridge circuit 4100 while preventing voltage of the first polarity from draining towards the second of the two DC input terminals DC+, DC-.

Similarly, the second branch of the first bridge circuit 4100 allows for switching a voltage of the opposite polarity from a second of the two DC input terminals DC+, DC-to the second intermediate node N3102 of the first bridge circuit 4100 while preventing voltage of the opposite polarity from draining towards the first of the two DC input terminals DC+, DC-.

Further, the third branch of the first bridge circuit 4100 includes a diode 4131. The diode 4131 interacts with the other switching element 4112 of the first branch of the first bridge circuit 4100 so as to allow for a freewheeling current to flow from the second intermediate node N4102 to the first intermediate node N4101 of the first bridging circuit 4100.

The first branch of the second bridge circuit 4200 includes a series circuit of a diode 4211 and a switching element 4212. The node interconnecting the diode 4211 and the switching element 4112 of the first branch of the second bridge circuit 4200 is the intermediate node N4201 thereof.

The second branch of the second bridge circuit 4200 includes a series circuit of a switching element 4221, another switching element 4222 and a diode 4223. The node interconnecting the other switching element 4222 and the diode 4224 of the second branch of the second bridge circuit 4200 is the second intermediate node N4202 thereof. The first and the second intermediate nodes N4201, N4202 are switchable interconnected via a third branch.

In detail, the first branch of the second bridge circuit 4200 allows for switching a voltage of the opposite polarity from the second of the two DC input terminals (DC+, DC-) to the first intermediate node N4201 of the second bridge circuit 4200 while preventing voltage of the opposite polarity from draining towards the first of the two DC input terminals DC+, DC-.

Similarly, the second branch of the second bridge circuit 4200 allows for switching a voltage of the first polarity from a first of the two DC input terminals DC+, DC- to the second intermediate node N4202 of second bridge circuit 4200 while preventing voltage of the first polarity from draining towards the second of the two DC input terminals DC+, DC-.

Further, the third branch of the second bridge circuit 4200 includes a diode 4231. The diode 4231 interacts with the other switching element 4222 of the second branch of the second bridge circuit 4200 so as to allow for a freewheeling current to flow from the first intermediate node N4201 to the second intermediate node N4202 of the second bridging circuit 4200.

For providing the first and the second half-wave, the switching elements of the first bridge circuit 4100 of the inverter 4000 are controlled in a same manner as the respective switching elements of the first bridge circuit 1100 of the inverter 1000 and the switching elements of the second bridge circuit 4200 of the inverter 4000 are controlled in a same manner as the respective switching elements of the second bridge circuit 1200 of the inverter 1000. Thereby, the functionality of the inverter 4000 is the same as that of the inverter 1000 of Fig. 1.

In the inverter 4000, a same first, second third and fourth inductive element 1301, 1302, 1303 and 1304 are provided as in the inverter 1000 show in Fig. 1. Thus, the inverter 4000 of this embodiment also provides in case of real power for the advantage of preventing the freewheeling current from flowing towards the two DC input terminals DC+, DC- and in case of reactive power, preventing the freewheeling current from causing reverse recovery losses at the switching elements within the first and second bridge circuit.

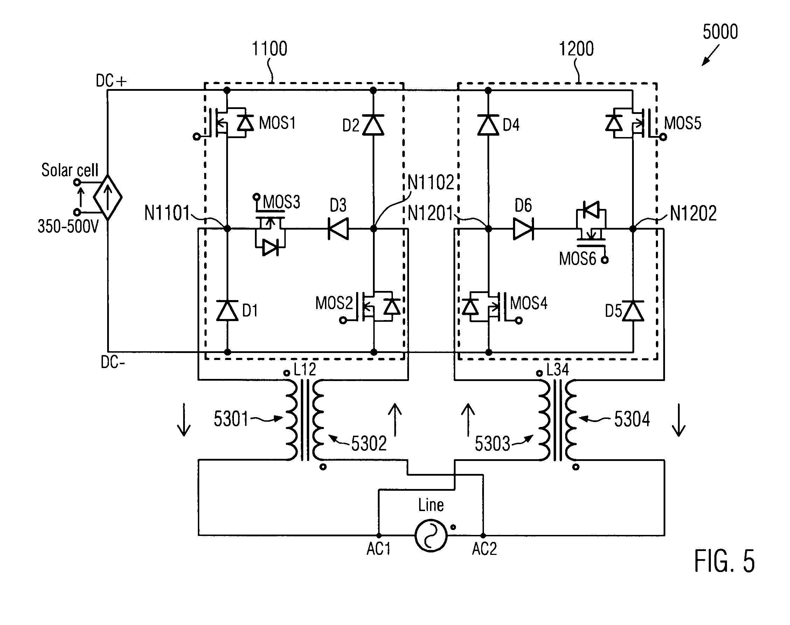

Referring now to Fig. 5, an inverter 5000 according to another exemplary embodiment of the invention is shown. The inverter 5000 of this embodiment is based on the inverter 1000 of Fig. 1 where corresponding parts are given corresponding reference numerals and terms. The detailed description of corresponding parts has been omitted for reasons of conciseness.

Specifically, the inverter 5000 includes a same first and second bridge circuit 1100, 1200 as that of the inverter 1000 of Fig. 1. Consequently, the first bridge circuit of the inverter allows for providing a first half-wave of a first polarity to a pair of AC output terminals AC1, AC2 and the second bridge circuit 1200 allows for providing a second half-wave of an opposite polarity to the pair of AC output terminals.

The inverter 5000, however, uses another configuration for connecting the first and the second bridge circuit 1100, 1200 to the AC output terminals with respect to the inverter 1000 of Fig. 1 as will become apparent from the following.

The first and the second intermediate nodes N1101, N1102 of the first bridge circuit 1100 are respectively connected via a first and a second inductive element 5301, 5302 to the two Ac output terminals AC1, AC2. Similarly, the first and second intermediate nodes N1201, N1202 of the second bridge circuit 1200 are respectively connected via a third and fourth inductive element 5303, 5304 to the two AC output terminals.

Accordingly, a first half-wave provided by the first bridge circuit between the first and the second intermediate node N1101, N1102 of the first bridge circuit may be supplied via the first and second inductive element 5301, 5302 to the AC output terminals AC1, AC2. A second half-wave provided by the second bridge circuit 1200 between the first and the second intermediate node N1201, N1202 may be supplied via the third and the fourth inductive element 5303, 5304 to the AC output terminals AC1, AC2.

In the inverter 5000 of this embodiment, the first and the second inductive elements 5301, 5302 are configured as a common-mode choke element for passing differential current from the first and second intermediate node N1101, N1102 of the first bridge circuit to the pair of AC output terminals. Similarly, the third and fourth inductive elements 5303, 5304 are configured as another common-mode choke element also for passing differential current from the first and second intermediate node N1201, N1202 of the second bridge circuit to the pair of AC output terminals. The common-mode choke element and the other common-mode choke element are provided separately.

In particular, providing separate common-mode choke elements for the inverter 5000 reduces the costs and complexity of the elements 5301, 5302 as well as 5303, 5304 and improves a modular realization of the inverter. In particular, the first and the second bridge circuit 1100, 1200 can be integrally manufactured with the respective common-mode choke element 5301, 5302, reducing intermediate wiring and, hence, improving the precision of the common voltage suppression by the inverter 5000.

In the inverter 5000, a similar configuration is used for the first, second third and fourth inductive element 5301, 5302, 5303 and 5304 compared to the first, second third and fourth inductive element 1301, 1302, 1303 and 1304 of the inverter 1000 show in Fig. 1. With this similar configuration, the inverter 5000 of this embodiment also provides in case of real power for the advantage of preventing the freewheeling current from flowing towards the two DC input terminals DC+, DC- and in case of reactive power, preventing the freewheeling current from causing reverse recovery losses at the switching elements within the first and second bridge circuit.

Referring now to Fig. 6, an inverter 6000 according to another exemplary embodiment of the invention is shown. The inverter 6000 of this embodiment is based on the inverter 1000 of Fig. 1 where corresponding parts are given corresponding reference numerals and terms. The detailed description of corresponding parts has been omitted for reasons of conciseness.

Specifically, the inverter 6000 includes a same first and second bridge circuit 1100, 1200 as that of the inverter 1000 of Fig. 1. Consequently, the first bridge circuit of the inverter 6000 allows for providing a first half-wave of a first polarity to a pair of AC output terminals AC1, AC2 and the second bridge circuit allows for providing a second half-wave of an opposite polarity to the pair of AC output terminals.

The inverter 6000, however, uses another configuration for connecting the first and the second bridge circuit 1100, 1200 to the AC output terminals with respect to the inverter 1000 of Fig. 1 as will become apparent from the following.

The first and the second intermediate nodes N1101, N1102 of the first bridge circuit 1100 are respectively connected via a first and a second inductive element 6301, 6302 to the two Ac output terminals AC1, AC2. Similarly, the first and second intermediate nodes N1201, N1202 of the second bridge circuit 1200 are respectively connected via a third and fourth inductive element 6303, 6304 to the two AC output terminals.

Accordingly, a first half-wave provided by the first bridge circuit 1100 between the first and the second intermediate node N1101, N1102 of the first bridge circuit may be supplied via the first and second inductive element 6301, 6302 to the AC output terminals AC1, AC2. A second half-wave provided by the second bridge circuit 1200 between the first and the second intermediate node N1201, N1202 may be supplied via the third and the fourth inductive element 6303, 6304 to the AC output terminals AC1, AC2.

In the inverter 6000 of this embodiment, the first and the second inductive elements 6301, 6302 are configured as a separate choke elements. Similarly, the third and fourth inductive elements 6303, 6304 are configured as separate choke elements. Each choke element allows for blocking high frequency components while passing signals of lower frequency, e.g. of the mains frequency.

In the inverter 6000, a similar configuration is used for the first, second third and fourth inductive element 6301, 6302, 6303 and 6304 compared to the first, second third and fourth inductive element 1301, 1302, 1303 and 1304 of the inverter 1000 show in Fig. 1. With this similar configuration, the inverter 6000 of this embodiment also provides in case of real power for the advantage of preventing the freewheeling current from flowing towards the two DC input terminals DC+, DC- and in case of reactive power, preventing the freewheeling current from causing reverse recovery losses at the switching elements within the first and second bridge circuit.

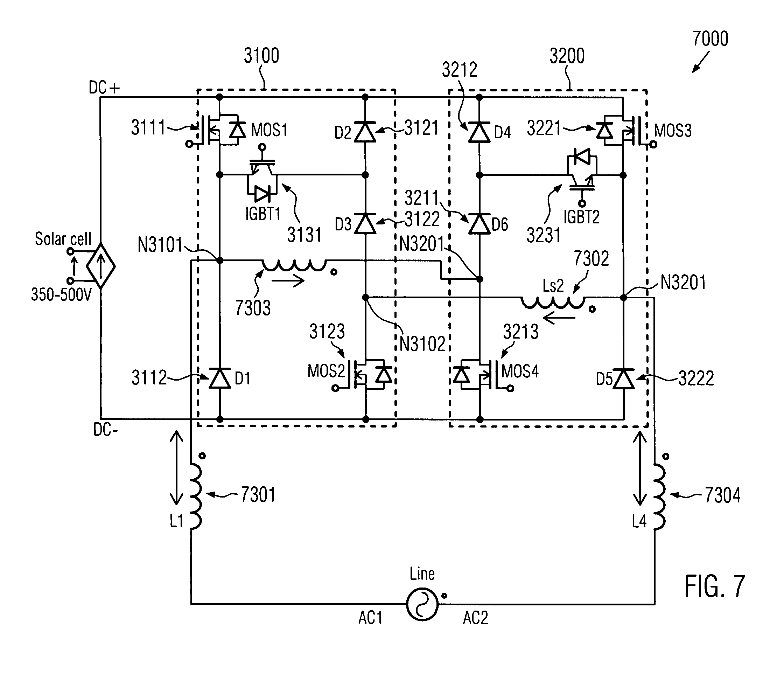

Referring now to Fig. 7, an inverter 7000 according to another exemplary embodiment of the invention is shown. The inverter 7000 of this embodiment is based on the inverter 3000 of Fig. 3 where corresponding parts are given corresponding reference numerals and terms. The detailed description of corresponding parts has been omitted for reasons of conciseness.

Specifically, the inverter 3000 includes a same first and second bridge circuit 3100, 3200 as that of the inverter 3000 of Fig. 3. Consequently, the first bridge circuit of the inverter 3000 allows for providing a first half-wave of a first polarity to a pair of AC output terminals AC1, AC2 and the second bridge circuit allows for providing a second half-wave of an opposite polarity to the pair of AC output terminals.

The inverter 3000, however, uses another configuration for connecting the first and the second bridge circuit 3100, 3200 to the AC output terminals with respect to the inverter 1000 of Fig. 1 as will become apparent from the following.

The first intermediate nodes N3101 of the first bridge circuit 3100 is connected via a first inductive element 7301 to the first AC output terminal AC1. The second intermediate node N3102 of the first bridge circuit 3100 is connected via a second inductive element 7302 to the second intermediate node N3202 of the second bridge circuit. The first intermediate node N3201 of the second bridge circuit 3200 is connected via a third inductive element 7303 to the first intermediate node N3201 of the second bridge circuit 3200. The second intermediate node N3202 of the second bridge circuit is connected via a fourth inductive element 7304 to the second AC output terminal AC2.

In this respect, the first intermediate node N3201 of the second bridge circuit 3200 is connected via a series circuit of the third inductive element 7303 and of the first inductive element 7301 to the first AC output terminal AC1. Similarly, the second intermediate node N31 02 of the first bridge circuit 3100 is connected via a series circuit of the second inductive element 7302 and of the fourth inductive element 7304 to the second output terminal AC2.

Accordingly, a first half-wave provided by the first bridge circuit 3100 between the first and the second intermediate node N3101, N3102 of the first bridge circuit may be supplied via the first and respectively, second and fourth inductive element 7301, 7302 and 7304 to the AC output terminals AC1, AC2. A second half-wave provided by the second bridge circuit 3200 between the first and the second intermediate node N3201, N3202 may be supplied via the third and first and respectively, the fourth inductive element 7303 and 7301, 7304 to the AC output terminals AC1, AC2.

In a particular example of this embodiment, the first and fourth inductive element 7301, 7304 are configured as bidirectional filter inductors and the second and third inductive elements 7302, 7303 are configured as decoupling inductors.

In the inverter 7000, a similar configuration is used for the first, second third and fourth inductive element 7301, 7302, 7303 and 7304 compared to the first, second third and fourth inductive element 3301, 3302, 3303 and 3304 of the inverter 3000 show in Fig. 3. With this similar configuration, the inverter 3000 of this embodiment also provides in case of real power for the advantage of preventing the freewheeling current from flowing towards the two DC input terminals DC+, DC- and in case of reactive power, preventing the freewheeling current from causing reverse recovery losses at the switching elements within the first and second bridge circuit.

While the invention has been described with respect to the physical embodiments constructed in accordance therewith, it will be apparent to those skilled in the art that various modifications, variations and improvements of the present invention may be made in the light of the above teachings and within the purview of the appended claims without departing from the spirit and intended scope of the invention.

In addition, those areas in which it is believed that those ordinary skilled in the art are familiar have not been described herein in order not to unnecessarily obscure the invention described herein.

Accordingly, it is to be understood that the invention is not to be limited by the specific illustrated embodiments but only by the scope of the appended claims.

## Claims

1. Inverter including two DC input terminals (DC+, DC-) with a first and a second bridge circuit (1100, 1200) connected in parallel therebetween, the first bridge circuit for providing a first half-wave of a first polarity to a pair of AC output terminals (AC1, AC2) and the second bridge circuit for providing a second half-wave of an opposite polarity to the pair of AC output terminals,
each of the first and second bridge circuit (1100, 1200) including
a first and a second branch, each comprising at least a switching element and a reversely-biased diode, and including a third branch for switchable interconnecting a first intermediate node (N1101; N1201) of the first branch to a second intermediate node (N1102; N1202) of the second branch;
wherein a first half-wave, provided between the first and second intermediate node (N1101, N1102) of the first bridge circuit (1100), is supplied via a first and a second inductive element (1301, 1302) to the pair of AC output terminals, and the second half-wave, provided between the first and second intermediate node (N1201, N1202) of the second bridge circuit (1200), is supplied via a third and a fourth inductive element (1303, 1304) to the pair of AC output terminals,
such that at least one of the first, second, third or fourth inductive element (1301, 1302, 1303, 1304) is connecting the first intermediate node (N1101) of the first bridge circuit (1100) to the first intermediate node (N1201) of the second bridge circuit (1200), and at least another of the first, second, third or fourth inductive element (1301, 1302, 1303, 1304) is connecting the second intermediate node (N1102) of the first bridge circuit (1100) to the second intermediate node (N1202) of the second bridge circuit (1200).

2. The inverter according to claim 1, wherein the third branch of the first bridge circuit (1200) includes a series circuit of a switching element and a diode configured for connecting the second intermediate node (N1102) to the first intermediate node (N1101) of the first bridge circuit, and the third branch of the second bridge circuit includes a series circuit of a switching element and a diode configured for connecting the first intermediate node (N1201) to the second intermediate node (N1202) of the second bridge circuit.

3. The inverter according to claim 1, wherein
the third branch of the first bridge circuit and the third branch of the second bridge circuit use a single switching element (2401) for respectively interconnecting the first and second intermediate nodes (N2101, N2102) and/or the first and the second intermediate nodes (N2201, N2202) of the first and second bridge circuit (2100, 2200).

4. The inverter according to claim 3, wherein
the single switching element (2401) is connected so as supply current from the second intermediate node (N2102) of the first bridge circuit (2100) or from the first intermediate node (N2201) of the second bridge circuit (2200) to the first intermediate node (N2101) of the first bridge circuit (2100) and to the second intermediate node (N2202) of the second bridge circuit (2200); and wherein a first and a second diode (2402, 2403) prevent current from flowing between the second intermediate node (N2102) of the first bridge circuit (2100) or from the first intermediate node (N2201) of the second bridge circuit (2200) and a third and a fourth diode (2404, 2405) prevent current from flowing between the first intermediate node (N2101) of the first bridge circuit (2100) and the second intermediate node (N2202) of the second bridge circuit (2200).

5. The inverter according to claim 1, wherein
the first branch of the first bridge circuit (3100) includes the switching element (3111) and the reversely-biased diode (3112) for switching a voltage of the first polarity from a first of the two DC input terminals (DC+, DC-) to the first intermediate node (N3101) of the first bridge circuit (3100) while preventing voltage of the first polarity from draining towards the second of the two DC input terminals (DC+, DC-),
the second branch of the first bridge circuit (3100) includes the switching element (3123), the reversely-biased diode (3121) and another reversely-biased diode (3122) for switching a voltage of the opposite polarity from a second of the two DC input terminals (DC+, DC-) to the second intermediate node (N3102) of the first bridge circuit (3100) while preventing voltage of the opposite polarity from draining towards the first of the two DC input terminals (DC+, DC-), and
the third branch of the first bridge circuit (3100) includes a third switching element (3131) which together with the other diode (3122) of the second branch of the first bridge circuit (3100) allows for a freewheeling current to flow from the second intermediate node (N3102) to the first intermediate node (N3101) of the first bridging circuit (3100); and
the first branch of the second bridge circuit (3200) includes the switching element (3213), the reversely-biased diode (3211) and another reversely-biased diode (3212) for switching a voltage of the opposite polarity from the second of the two DC input terminals (DC+, DC-) to the first intermediate node (N3201) of the second bridge circuit (3200) while preventing voltage of the opposite polarity from draining towards the first of the two DC input terminals (DC+, DC-),
the second branch of the second bridge circuit (3200) includes the switching element (3221) and the reversely-biased diode (3222) for switching a voltage of the first polarity from a first of the two DC input terminals (DC+, DC-) to the second intermediate node (N3202) of second bridge circuit (3200) while preventing voltage of the first polarity from draining towards the second of the two DC input terminals (DC+, DC-), and
the third branch of the second bridge circuit (3100) includes a third switching element (3231) which together with the other diode (3212) of the first branch of the second bridge circuit (3200) allows for a freewheeling current to flow from the first intermediate node (N3201) to the second intermediate node (N3202) of the second bridging circuit (3200).

6. The inverter according to claim 1, wherein
the first branch of the first bridge circuit (4100) includes the switching element (4111), another switching element (4112) and the reversely-biased diode (4112) for switching a voltage of the first polarity from a first of the two DC input terminals (DC+, DC-) to the first intermediate node (N4101) of the first bridge circuit (3100) while preventing voltage of the first polarity from draining towards the second of the two DC input terminals (DC+, DC-),
the second branch of the first bridge circuit (4100) includes the switching element (4122) and the reversely-biased diode (4121) for switching a voltage of the opposite polarity from a second of the two DC input terminals (DC+, DC-) to the second intermediate node (N4102) of the first bridge circuit (4100) while preventing voltage of the opposite polarity from draining towards the first of the two DC input terminals (DC+, DC-), and
the third branch of the first bridge circuit (3100) includes a diode (4131) which together with the other switching element (4112) of the first branch of the first bridge circuit (4100) allows for a freewheeling current to flow from the second intermediate node (N41 02) to the first intermediate node (N4101) of the first bridging circuit (4100); and
the first branch of the second bridge circuit (4200) includes the switching element (4211) and the reversely-biased diode (4212) for switching a voltage of the opposite polarity from the second of the two DC input terminals (DC+, DC-) to the first intermediate node (N4201) of the second bridge circuit (4200) while preventing voltage of the opposite polarity from draining towards the first of the two DC input terminals (DC+, DC-),
the second branch of the second bridge circuit (4200) includes the switching element (4221) another switching element (4222) and the reversely-biased diode (4223) for switching a voltage of the first polarity from a first of the two DC input terminals (DC+, DC-) to the second intermediate node (N4202) of the second bridge circuit (4200) while preventing voltage of the first polarity from draining towards the second of the two DC input terminals (DC+, DC-), and
the third branch of the second bridge circuit (3100) includes a diode (4231) which together with the other switching element (4222) of the second branch of the second bridge circuit (4200) allows for a freewheeling current to flow from the first intermediate node (N4201) to the second intermediate node (N4202) of the second bridging circuit (4200).

7. The inverter according to any of claims 1 to 6, wherein
the first inductive element (1301) is a first choke element (L1), the second inductive element (1302) is a second choke element (L2), the third inductive element is a third choke element (L3) and the fourth inductive element (1304) is a fourth choke element (L4).

8. The inverter according to any of claims 1 to 6, wherein
the first inductive element (1301) and the second inductive element (1302) are configured as a common-mode choke element for passing differential current from the first intermediate node (N1101) and the second intermediate node (N1102) of the first bridge circuit (1100) to the pair of AC output terminals, and
the third inductive element (1303) and the fourth inductive element (1304) are configured as another common-mode choke element for passing differential current form the first intermediate node (N1201) and the second intermediate node (N1202) of the second bridge circuit (1200) to the pair of AC output terminals.

9. The inverter according to claim 8, wherein
the common-mode choke element and the other common-mode choke element are configured with a same ferrite core such that the magnetic field induced therein reverses when alternatively providing the first half-wave of the first polarity to the pair of AC output terminals and providing the second half-wave of the opposite polarity to the pair of AC output terminals.

10. The inverter according to any of claims 1 to 6, wherein
the first inductive element (1301) is connected to the first intermediate node (N1101) of the first bridge circuit (1100) and to a first of the pair of AC output terminals,
the second inductive element (1302) is connected to the second intermediate node (N1102) of the first bridge circuit (1100) and to the second intermediate node (N1202) of the second bridge circuit (1200),
the third inductive element (1303) is connected to the first intermediate node (N1101) of the first bridge circuit (1100) and to the first intermediate node (N1201) of the second bridge circuit (1200), and
the fourth inductive element (1304) is connected to the second intermediate node (N1202) of the second bridge circuit (1200) and to a second of the pair of AC output terminals.

11. The inverter according to claims 10, wherein
the first inductive element (1301) is a bidirectional filter, and the fourth inductive element (1304) is a bidirectional filter; and
the second inductive element (1302) is a decoupling inductor, and the third inductive element (1303) is a decoupling inductor.

12. The inverter according to any of claims 1 to 11, wherein
the switching elements of the inverter are metal―oxide―semiconductor field-effect transistors.

13. The inverter according to any of claims 1 to 11, wherein
the switching elements included in the first and second branch of the first and second bridge circuit (1100, 1200) are metal―oxide―semiconductor field-effect transistors, and the switching elements included in the third branch of the first and second bridge circuit (1100, 1200) are Insulated-gate bipolar transistors.

14. The inverter according to any of claims 1 to 13, wherein
the reversely-biased diode(s) of the first and second branch of the first bridge circuit (1100) and the reversely-biased diode(s) of the first and second branch of the second bridge circuit (1200) of the inverter are ultra fast diodes so as to reduce reverse recovery effects of body-diodes included in the switching elements included in the first and second branch of the first and second bridge circuit (1100, 1200).

## Amended claims

### Amended claims in accordance with Rule 137(2) EPC.

**1.** Inverter including two DC input terminals (DC+, DC-) with a first and a second bridge circuit (1100, 1200) connected in parallel therebetween, the first bridge circuit for providing a first half-wave of a first polarity to a pair of AC output terminals (AC1, AC2) and the second bridge circuit for providing a second half-wave of an opposite polarity to the pair of AC output terminals,
each of the first and second bridge circuit (1100, 1200) including
a first and a second branch, each comprising at least a switching element and a reversely-biased diode, and including a third branch for switchable interconnecting a first intermediate node (N1101; N1201) of the first branch to a second intermediate node (N1102; N1202) of the second branch;
wherein a first half-wave, provided between the first and second intermediate node (N1101, N1102) of the first bridge circuit (1100), is supplied via a first and a second inductive element (1301, 1302) to the pair of AC output terminals, and the second half-wave, provided between the first and second intermediate node (N1201, N1202) of the second bridge circuit (1200), is supplied via a third and a fourth inductive element (1303, 1304) to the pair of AC output terminals,
such that at least one of the first, second, third or fourth inductive element (1301, 1302, 1303, 1304) is connecting the first intermediate node (N1101) of the first bridge circuit (1100) to the first intermediate node (N1201) of the second bridge circuit (1200), and at least another of the first, second, third or fourth inductive element (1301, 1302, 1303, 1304) is connecting the second intermediate node (N1102) of the first bridge circuit (1100) to the second intermediate node (N1202) of the second bridge circuit (1200)
**characterized in that**:
the first inductive element (1301) and the second inductive element (1302) are configured as a common-mode choke element for passing differential current from the first intermediate node (N1101) and the second intermediate node (N1102) of the first bridge circuit (1100) to the pair of AC output terminals, and
the third inductive element (1303) and the fourth inductive element (1304) are configured as another common-mode choke element for passing differential current form the first intermediate node (N1201) and the second intermediate node (N1202) of the second bridge circuit (1200) to the pair of AC output terminals.

**2.** The inverter according to claim 1, wherein the third branch of the first bridge circuit (1200) includes a series circuit of a switching element and a diode configured for connecting the second intermediate node (N1102) to the first intermediate node (N1101) of the first bridge circuit, and the third branch of the second bridge circuit includes a series circuit of a switching element and a diode configured for connecting the first intermediate node (N1201) to the second intermediate node (N1202) of the second bridge circuit.

**3.** The inverter according to claim 1, wherein
the third branch of the first bridge circuit and the third branch of the second bridge circuit use a single switching element (2401) for respectively interconnecting the first and second intermediate nodes (N2101, N2102) and/or the first and the second intermediate nodes (N2201, N2202) of the first and second bridge circuit (2100, 2200).

**4.** The inverter according to claim 3, wherein
the single switching element (2401) is connected so as supply current from the second intermediate node (N2102) of the first bridge circuit (2100) or from the first intermediate node (N2201) of the second bridge circuit (2200) to the first intermediate node (N2101) of the first bridge circuit (2100) and to the second intermediate node (N2202) of the second bridge circuit (2200); and wherein a first and a second diode (2402, 2403) prevent current from flowing between the second intermediate node (N2102) of the first bridge circuit (2100) or from the first intermediate node (N2201) of the second bridge circuit (2200) and a third and a fourth diode (2404, 2405) prevent current from flowing between the first intermediate node (N2101) of the first bridge circuit (2100) and the second intermediate node (N2202) of the second bridge circuit (2200).

**5.** The inverter according to claim 1, wherein
the first branch of the first bridge circuit (3100) includes the switching element (3111) and the reversely-biased diode (3112) for switching a voltage of the first polarity from a first of the two DC input terminals (DC+, DC-) to the first intermediate node (N3101) of the first bridge circuit (3100) while preventing voltage of the first polarity from draining towards the second of the two DC input terminals (DC+, DC-),
the second branch of the first bridge circuit (3100) includes the switching element (3123), the reversely-biased diode (3121) and another reversely-biased diode (3122) for switching a voltage of the opposite polarity from a second of the two DC input terminals (DC+, DC-) to the second intermediate node (N3102) of the first bridge circuit (3100) while preventing voltage of the opposite polarity from draining towards the first of the two DC input terminals (DC+, DC-), and
the third branch of the first bridge circuit (3100) includes a third switching element (3131) which together with the other diode (3122) of the second branch of the first bridge circuit (3100) allows for a freewheeling current to flow from the second intermediate node (N3102) to the first intermediate node (N3101) of the first bridging circuit (3100); and the first branch of the second bridge circuit (3200) includes the switching element (3213), the reversely-biased diode (3211) and another reversely-biased diode (3212) for switching a voltage of the opposite polarity from the second of the two DC input terminals (DC+, DC-) to the first intermediate node (N3201) of the second bridge circuit (3200) while preventing voltage of the opposite polarity from draining towards the first of the two DC input terminals (DC+, DC-),
the second branch of the second bridge circuit (3200) includes the switching element (3221) and the reversely-biased diode (3222) for switching a voltage of the first polarity from a first of the two DC input terminals (DC+, DC-) to the second intermediate node (N3202) of second bridge circuit (3200) while preventing voltage of the first polarity from draining towards the second of the two DC input terminals (DC+, DC-), and
the third branch of the second bridge circuit (3100) includes a third switching element (3231) which together with the other diode (3212) of the first branch of the second bridge circuit (3200) allows for a freewheeling current to flow from the first intermediate node (N3201) to the second intermediate node (N3202) of the second bridging circuit (3200).

**6.** The inverter according to claim 1, wherein
the first branch of the first bridge circuit (4100) includes the switching element (4111), another switching element (4112) and the reversely-biased diode (4112) for switching a voltage of the first polarity from a first of the two DC input terminals (DC+, DC-) to the first intermediate node (N4101) of the first bridge circuit (3100) while preventing voltage of the first polarity from draining towards the second of the two DC input terminals (DC+, DC-),
the second branch of the first bridge circuit (4100) includes the switching element (4122) and the reversely-biased diode (4121) for switching a voltage of the opposite polarity from a second of the two DC input terminals (DC+, DC-) to the second intermediate node (N4102) of the first bridge circuit (4100) while preventing voltage of the opposite polarity from draining towards the first of the two DC input terminals (DC+, DC-), and
the third branch of the first bridge circuit (3100) includes a diode (4131) which together with the other switching element (4112) of the first branch of the first bridge circuit (4100) allows for a freewheeling current to flow from the second intermediate node (N4102) to the first intermediate node (N4101) of the first bridging circuit (4100); and
the first branch of the second bridge circuit (4200) includes the switching element (4211) and the reversely-biased diode (4212) for switching a voltage of the opposite polarity from the second of the two DC input terminals (DC+, DC-) to the first intermediate node (N4201) of the second bridge circuit (4200) while preventing voltage of the opposite polarity from draining towards the first of the two DC input terminals (DC+, DC-),
the second branch of the second bridge circuit (4200) includes the switching element (4221) another switching element (4222) and the reversely-biased diode (4223) for switching a voltage of the first polarity from a first of the two DC input terminals (DC+, DC-) to the second intermediate node (N4202) of the second bridge circuit (4200) while preventing voltage of the first polarity from draining towards the second of the two DC input terminals (DC+, DC-), and
the third branch of the second bridge circuit (3100) includes a diode (4231) which together with the other switching element (4222) of the second branch of the second bridge circuit (4200) allows for a freewheeling current to flow from the first intermediate node (N4201) to the second intermediate node (N4202) of the second bridging circuit (4200).

**7.** The inverter according to any of claims 1 to 6, wherein
the first inductive element (1301) is a first choke element (L1), the second inductive element (1302) is a second choke element (L2), the third inductive element is a third choke element (L3) and the fourth inductive element (1304) is a fourth choke element (L4).

**8.** The inverter according to claim 1, wherein
the common-mode choke element and the other common-mode choke element are configured with a same ferrite core such that the magnetic field induced therein reverses when alternatively providing the first half-wave of the first polarity to the pair of AC output terminals and providing the second half-wave of the opposite polarity to the pair of AC output terminals.

**9.** The inverter according to any of claims 1 to 6, wherein
the first inductive element (1301) is connected to the first intermediate node (N1101) of the first bridge circuit (1100) and to a first of the pair of AC output terminals,
the second inductive element (1302) is connected to the second intermediate node (N1102) of the first bridge circuit (1100) and to the second intermediate node (N1202) of the second bridge circuit (1200),
the third inductive element (1303) is connected to the first intermediate node (N1101) of the first bridge circuit (1100) and to the first intermediate node (N1201) of the second bridge circuit (1200), and
the fourth inductive element (1304) is connected to the second intermediate node (N1202) of the second bridge circuit (1200) and to a second of the pair of AC output terminals.

**10.** The inverter according to claims 3, wherein
the first inductive element (1301) is a bidirectional filter, and the fourth inductive element (1304) is a bidirectional filter; and
the second inductive element (1302) is a decoupling inductor, and the third inductive element (1303) is a decoupling inductor.

**11.** The inverter according to any of claims 1 to 10, wherein
the switching elements of the inverter are metal-oxide-semiconductor field-effect transistors.

**12.** The inverter according to any of claims 1 to 10, wherein
the switching elements included in the first and second branch of the first and second bridge circuit (1100, 1200) are metal-oxide-semiconductor field-effect transistors, and the switching elements included in the third branch of the first and second bridge circuit (1100, 1200) are Insulated-gate bipolar transistors.

**13.** The inverter according to any of claims 1 to 12, wherein
the reversely-biased diode(s) of the first and second branch of the first bridge circuit (1100) and the reversely-biased diode(s) of the first and second branch of the second bridge circuit (1200) of the inverter are ultra fast diodes so as to reduce reverse recovery effects of body-diodes included in the switching elements included in the first and second branch of the first and second bridge circuit (1100, 1200).
